# EUROPEAN PATENT APPLICATION

(11) **EP 4 840 584 A2**
(43) Date of publication of application: **18.11.2026**
(21) Application number: 26178342.7
(22) Date of filing: 12.05.2026
(51) Int. Cl.: B23Q 17/10, B23Q 5/58, G05B 19/406, B23Q 5/10

(54) **IMPROVED MACHINING UNIT, MACHINING CENTER INCLUDING SUCH MACHINING UNIT, AND CONTROL METHOD**

(30) Priority: 15.05.2025 IT 202500010902
(71) Applicant: Hiteco S.r.l., 47921 Rimini (RN) (IT)
(72) Inventor: FABBRI, Filippo, 47921 RIMINI (IT); MAZZA, Michele, 47921 RIMINI (IT)
(74) Representative: Tiburzi, Andrea

(57) **Abstract**

The present invention relates to a machining unit (U) for machining of workpieces, such as wooden, plastic, fiberglass, carbon, metal workpieces, and the like, comprising: a machining assembly (A) having: an electro-spindle (1), comprising an electric motor (13) for generating a driving force, a machining tool (3) for machining workpieces, a drive shaft (12), operated by said electric motor (13), wherein said drive shaft (12) is configured to transmit the driving torque of said electric motor (13), and a tool holder (14), mechanically coupled to said drive shaft (12); machining tool (3), for machining a workpiece, wherein said machining tool (3) is removably couplable to said tool holder (14) of said electro-spindle (1), so as to be driven by the driving torque of said electric motor (13), wherein the operation of said machining tool (3) is defined by one or more operating parameters (*vₒₚₘ*, *B, Mᵤₜ*, *vₙₘᵤ*); and a control system (2), for controlling the speed of the drive shaft (12) of said electro-spindle (1);

The present invention also relates to a work center (M) and a method (100) for controlling the operation of an electro-spindle (1).

## Description

The present invention relates to an improved machining unit, machining center including such machining unit, and control method.

### Field of invention

More specifically, the invention concerns a machining unit having an electro-spindle, intended for machining centers, designed and manufactured in particular to allow the compatibility control and correct use of a machining tool by an electro-spindle in an automatic and safe manner.

In the following, the description will be addressed to the application of woodworking tools, but it is clear that the same should not be considered limited to this specific use.

### Prior art

Electric spindles are widely used in machine tools for machining various materials such as wood, plastic, metal, and composites. These devices reach high rotation speeds, typically up to 24,000 rpm, but can also exceed this speed.

Electro-spindles are designed to accommodate different types of interchangeable tools at a mating cone, each with its own specific characteristics and operating limitations.

In recent years, the technology of "smart" coupling cones has become widespread, allowing the electric spindle and/or machine to automatically recognize the mounted tool. This is achieved through radio frequency identification (RFID) systems or other contactless data transmission methods between the tool and the electric spindle.

However, when coupling a tool to a spindle, the maximum rotation speed that the combined system can safely handle is typically lower than the spindle's nominal speed. This is due to the magnitude and location of the tool's additional mass, which can often significantly alter the dynamic characteristics of the overall rotating system. Exceeding the safely manageable rotation speed can trigger resonance and excessive vibration, resulting in safety and machining quality risks, not to mention the risk of breakage of the machining aggregates.

Currently, to determine the maximum safe operating speed for each electric spindle-tool combination, curves or diagrams are used that relate this value to the tool's mass and the position of its center of gravity. These diagrams, or operating speed curves, should always be consulted manually by the operator before setting the machining parameters, thus introducing potential human error into the process.

A significant technical issue is the lack of an automated system for controlling the maximum operating speed based on the installed tool. This poses the risk that the operator may mistakenly set a rotation speed higher than that permitted for the specific combination of the electric spindle and tool in use.

Another technical problem is the lack of a safety mechanism that automatically intervenes to prevent the maximum operating speed from being exceeded, thus protecting the system from possible damage or malfunctions.

There is a clear need in the industry for a system that overcomes one or more of these problems.

### Purpose of the invention

In light of the above, it is therefore the aim of the present invention to provide a machining unit that automatically controls the maximum operating speed as a function of the tool mounted on the electro-spindle.

Another aim of the invention is to prevent the accidental exceeding of the maximum operating speed permitted for the specific electro-spindle-tool combination in use.

It is also the purpose of the present invention to implement a safety procedure that protects the system from possible damage or malfunctions due to excessive speed.

Another aim of the invention is to reduce the risk of human errors in setting the processing parameters.

It is also the purpose of the present invention to increase the safety and reliability of machining operations with high-speed electro-spindles.

### Object of the invention

It is, therefore, specific object of the present invention a machining unit for machining of workpieces, such as wooden, plastic, fiberglass, carbon, metal workpieces, and the like, comprising: a machining assembly having: an electro-spindle, comprising an electric motor for generating a driving force, a machining tool for machining workpieces, a drive shaft, operated by said electric motor, wherein said drive shaft is configured to transmit the driving torque of said electric motor, and a tool holder, mechanically coupled to said drive shaft; a machining tool, for machining a workpiece, wherein said machining tool is removably couplable to said tool holder of said electro-spindle, so as to be driven by the driving torque of said electric motor, wherein the operation of said machining tool is defined by one or more operating parameters; and a control system, for controlling the speed of the drive shaft of said electro-spindle characterized in that said control system comprises a processing unit, having a memory in which data related to at least one operating parameter of each tool couplable to the electro-spindle are stored, and sensor means, for determining the rotation speed of said drive shaft, wherein said processing unit is configured to: compare the rotation speed, or a function thereof, of said drive shaft as determined by said sensor means with said at least one control parameter of the machining tool coupled to said tool holder of said electro-spindle, wherein said maximum operating speed is a function of said operating parameters; and activate a safety procedure if said rotation speed, or a function thereof, of said drive shaft is greater than a pre-definable threshold of said control parameter of said machining tool coupled to said tool holder.

Always according to the invention, said machining tool may comprise a memory device in which a respective identifier is stored to indicate the type of the machining tool, said control system may comprise a detector, operatively connected to said processing unit, wherein said detector is connectable, preferably via a wireless connection, to said memory device of said machining tool, such that said detector acquires the identifier of said machining tool coupled to said electro-spindle, and said processing unit may be configured to determine or detect said one or more operating parameters following the acquisition of the identifier of said machining tool coupled to said electro-spindle as detected by said detector.

Further according to the invention said memory device of said machining tool may store said one or more operating parameters, and said one or more operating parameters may be transmitted to said detector to be processed by said processing unit for determining said maximum operating speed.

Preferably according to the invention, said control parameter may comprise the maximum operating speed of said machining tool.

Still according to the invention, said control parameter may comprise the nominal speed of said machining tool.

Advantageously according to the invention, said electric motor may be powered by a pulse width modulation (PWM) power supply, and said sensor means may comprise a signal meter, for detecting the frequency with which said electric motor is powered, to determine the rotation speed of said drive shaft.

Still according to the invention, when the rotation speed of said drive shaft as determined by said sensor means is greater than the maximum operating speed or said nominal speed of said machining tool coupled to said electro-spindle, said processing unit may be configured to: emit an alarm; and/or interrupt the rotation command of said electric motor; transmit an information message to a user's mobile terminal; and/or transmit a message to a cloud-operated remote control center; and/or interrupt the power supply to the machining center.

Preferably according to the invention, said operating parameters for characterizing each machining tool and/or for determining said maximum operating speed couplable to said electro-spindle, may comprise one or more of the following: mass of the machining tool; position of the center of mass of the machining tool, and/or other geometric parameters useful for estimating the distribution of the mass of the tool along its own axis; maximum nominal speed of the tool.

Still according to the invention, said processing unit may be arranged within the chassis of said electro-spindle.

Preferably according to the invention, said processing unit may be arranged remotely with respect to said electro-spindle.

It is also object of the present invention a machining center for machining wooden, plastic, metal workpieces, and the like, comprising a machining head having a machining unit as described before.

It il object of the present invention a method for controlling the operation of a machining unit as described above, comprising the following steps: acquiring said operating parameters associated with the machining tool coupled to said electro-spindle to determine said control parameter, such as the maximum operating speed of said machining tool and/or the nominal speed of said machining tool, when associated with said electro-spindle; determining the rotation speed of the drive shaft of said electro-spindle; and comparing the rotation speed of the drive shaft of said electro-spindle, or a function thereof, with a pre-definable threshold of said control parameter of said machining tool when associated with said electro-spindle; wherein if the rotation speed of the drive shaft, or a function thereof, is greater than said threshold of said control parameter, performing a safety procedure.

Further according to the invention, said acquisition step may comprise the sub-steps of: activating the detector of said electro-spindle, to operatively connect with the memory device of said machining tool; and acquiring the operating parameters of the machining tool when associated with the electro-spindle through said detector; and transmitting the operating parameters of the machining tool to said processing unit.

Still according to the invention, said step of determining the rotation speed of the drive shaft of said electro-spindle may comprise the sub-steps of: detecting the rotation speed of the drive shaft; and/or determining the rotation speed of the drive shaft by detecting the duty cycle of the electric motor power supply.

Preferably according to the invention, said comparison step may comprise the sub-step of determining the maximum operating speed associated with said machining tool by means of said operating parameters, wherein said operating parameters may comprise functions or curves of the operating speeds of the electro-spindle as a function of the mass and the position of the center of mass of the machining tool itself.

Further according to the invention, said step of performing said safety procedure may comprise the following sub-steps: emitting an alarm; and/or interrupting the power supply to the machining center; interrupting the rotation command of said electric motor; transmitting an information message to a user's mobile terminal; and/or transmitting a message to a cloud-operated remote control center; and/or interrupting the supply current to the machining center.

### Brief description of the figures

The present invention will be now described, for illustrative but not limitative purposes, according to its preferred embodiments, with particular reference to the figures of the enclosed drawings, wherein:
figure 1 shows a functional diagram of the processing unit according to the present invention;
figure 2 shows an embodiment of the processing unit according to the present invention;
figure 3 shows the operating speed curves as a function of the mass and the position of the center of gravity of a machining tool for a given electro-spindle;
figure 4 shows a working diagram of the machining unit of figure 2;

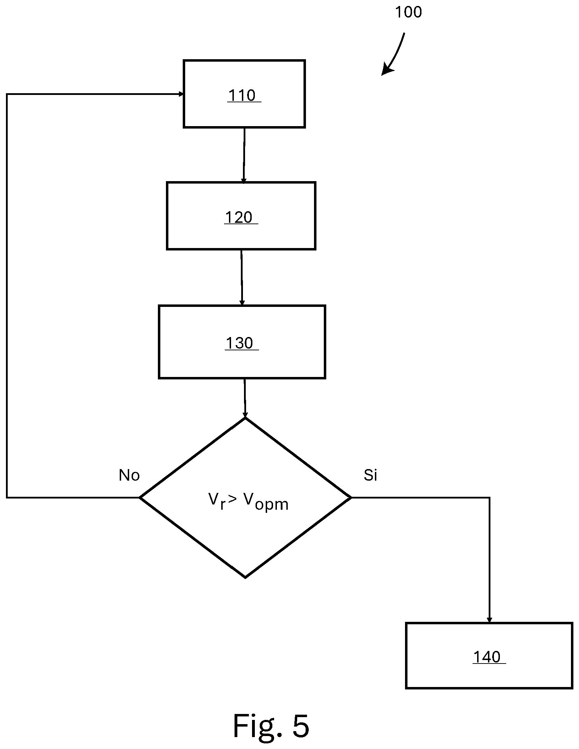

figure 5 shows a flow chart of the operation of the machining unit according to the present invention;
figure 6 shows a flowchart of the sub-steps of one of the flowchart steps in figure 5;
figure 7 shows a flowchart of the sub-steps of one of the flowchart steps in figure 5; and
figure 8 shows a flowchart of the sub-steps of one of the flowchart steps in figure 5.

### Detailed description

In the various figures, similar parts will be indicated with the same numerical references.

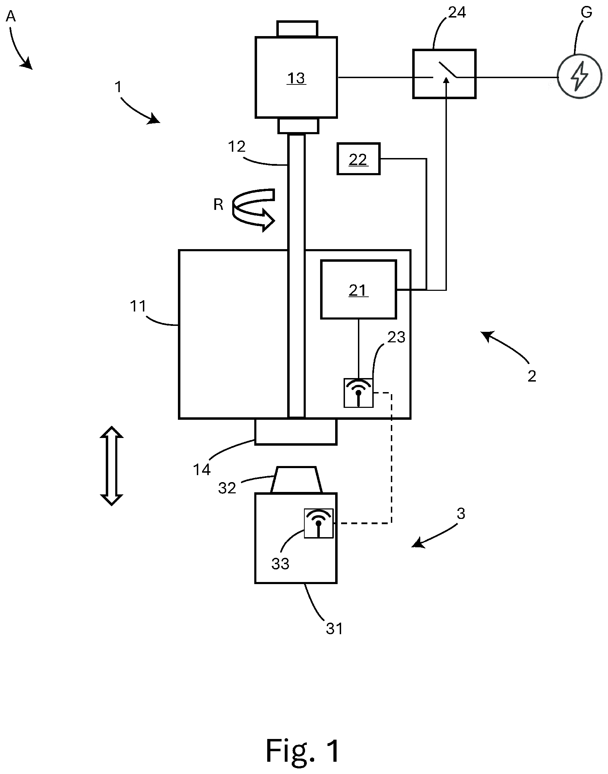

Figure 1 shows a machining system U according to the present invention comprising a machining assembly A and a control system 2.

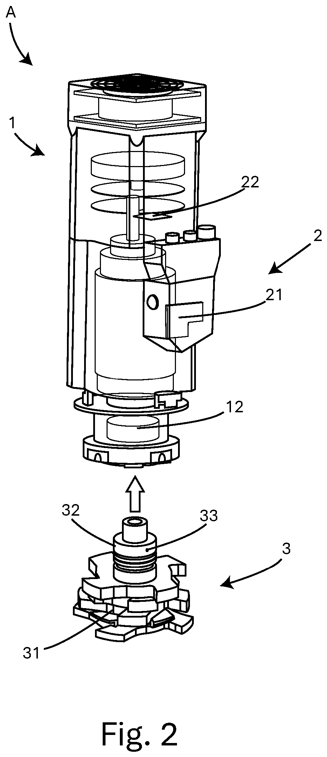

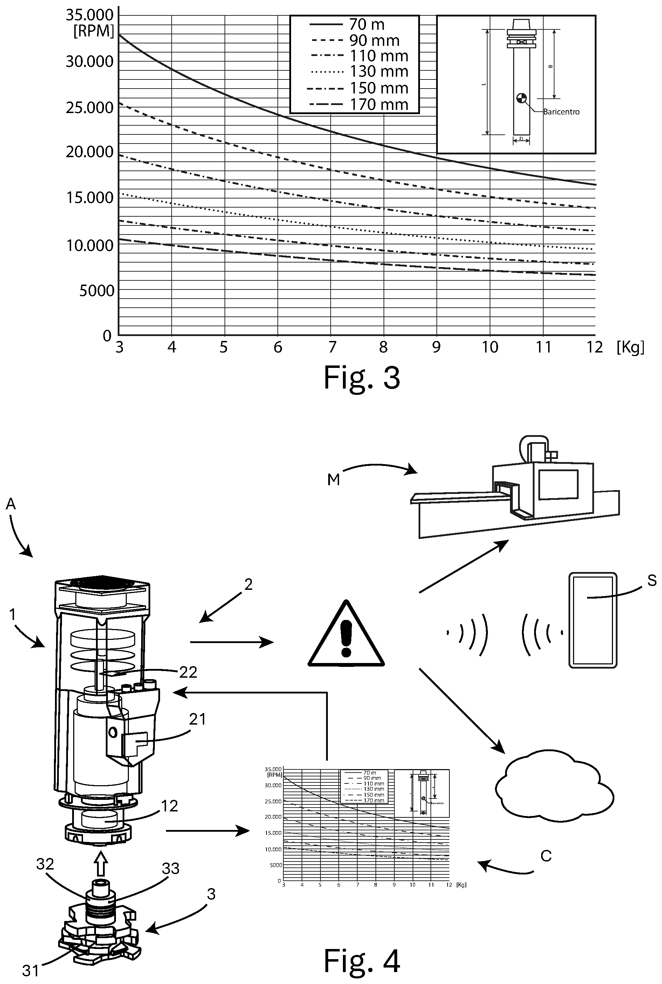

The machining assembly A comprises an electro-spindle 1 and a machining tool 3, as also illustrated in figures 2 and 3.

The electro-spindle 1 includes an electric motor 13 for generating a driving torque.

A drive shaft 12 (which rotates in the direction indicated by the arrow R) is coupled, directly or through an appropriate kinematic chain, to the electric motor 13, and is configured to transmit the driving torque of the electric motor 13 to the machining tool 3.

The electro-spindle 1 also comprises a tool holder 14 mechanically coupled to the drive shaft 12.

The electric motor 13, the drive shaft 12, and the tool holder 14 are housed inside a chassis 11 of the electro-spindle 1, as shown in figure 1.

The machining tool 3 can be removably coupled to the tool holder 14 of the electro-spindle 1.

As illustrated in figure 2, the machining tool 3 comprises a tool body 31 and a coupling portion or cone 32 designed to connect to the tool holder 14 of the electro-spindle 1.

The machining tool 3 also comprises a memory device 33 in which the tool's characteristic working parameters are stored. The memory device 33 may be of an active or passive type, such as an RFID or the like, the operation of which will be better described below.

These characteristic working parameters are operating characteristics specific to the machining tool 3, such as maximum rotation speed, position of the center of gravity, nominal speed, and the like.

The control system 2 comprises a processing unit 21 and sensor means 22 for controlling the rotation speed *vᵣ* of the drive shaft 12 of the electro-spindle 1.

The processing unit 21 has a memory in which data relating to the speed or more generally to the operating modes of each tool 3 that can be coupled to the electro-spindle 1 are stored.

The sensor means 22 are arranged and configured to determine the rotational instantaneous speed *vᵣ* of the drive shaft 12.

As shown in figure 1, the control system 2 also comprises a detector 23 operatively connected to the processing unit 21.

The detector 23 can be connected, preferably via a wireless connection, e.g. via radio frequency communication or similar, to the memory device 33 of the machining tool 3. This allows the detector 23 to acquire the identification of the machining tool 3 or the data relating to the type of machining tool 3 coupled to the electro-spindle 1.

The sensor means 22 may comprise a solid and hollow cam wheel coupled to an inductive sensor or an encoder applied to the drive shaft 12 to detect its rotation speed *vᵣ*.

In other embodiments, since the electric motor 13 is powered with voltages of variable amplitude and frequency obtained with pulse width modulation (PWM) techniques, the sensor system 22 may comprise an electrical signal meter (generally a current one), through which to detect the frequency of the current circulating in the electric motor 13, and therefore, indirectly, the rotation speed of the drive shaft 12.

The processing unit 21 may be arranged inside the chassis 11 of the electro-spindle 1, as shown in figure 1. Alternatively, the processing unit 21 may be arranged in a remote position with respect to the electro-spindle 1, or implemented in the control logic of the machining center, in which the processing unit U is installed.

The control system 2 also generates a control signal 24 capable of commanding the safe stop of the rotation of the electric motor 13 by acting directly on the rotation controller of the latter, as illustrated in figure 1. Said control signal 24 is processed by the processing unit 21.

Figure 3 illustrates the characteristic trends of the existing relationship, for the particular electro-spindle 1 taken into consideration, between the maximum operating rotation speed *Vₒₚₘ,* expressed in revolutions per minute (RPM), the mass of the tool *Mᵤₜ,* expressed in kilograms (kg), and the position *B,* expressed in (mm), of the center of gravity of the latter. The graph contains a plurality of curves, each representing a specific distance (variable in the example from 70 mm to 170 mm) of the center of gravity *B* of the machining tool relative to the machining tool 3.

The curves in the graph show that as the mass of the machining tool 3 increases, the maximum operating rotation speed *Vₒₚₘ* allowed decreases.

It can be seen how, with the same mass, the shorter machining tools allow higher rotation speeds than the longer tools because their center of gravity *B* is located closest to the coupling flange of the electro-spindle 1.

As mentioned, these curves represent the maximum operating speed *Vₒₚₘ* of the electro-spindle 1 for each mass combination *Mᵤₜ* (Kg) and position of the center of gravity *B* (mm) of the machining tool 3.

The processing unit 21 uses these curves that it has stored or specific algorithms capable of providing the same indications (and therefore of obtaining them) to determine the maximum operating speed *Vₒₚₘ* allowed for a specific machining tool 3 coupled to the electro-spindle 1.

Another important parameter of the machining tool 3 is the maximum nominal speed of the tool *Vₙₘᵤ,* always expressed in revolutions per minute (RPM), defined by the machining tool 3 to prevent the explosion of the machining tool 3 itself due to centrifugal forces. For safety reasons, this maximum nominal speed *Vₙₘᵤ* can never be exceeded under any circumstances.

The mass *Mᵤₜ,* the position of the center of gravity *B* and the maximum rated speed *Vₙₘᵤ* of the tool are the minimum working parameters essential to characterise each machining tool 3 that can be coupled to the electro-spindle 1. These operating parameters directly influence the maximum operating speed *vₒₚₘ.*

The processing unit 21 uses these curves, or specific algorithms capable of providing the same indications, and the nominal maximum speed *vₙₘᵤ* of the machining tool 3 to compare the actual rotation speed *vᵣ* of the drive shaft 12 of the electro-spindle 1 with the maximum operating speed *vₒₚₘ* allowed for the specific machining tool 3 in use.

In general, the processing unit 21 compares the rotation speed *vᵣ* or a function thereof, of said drive shaft 12 with at least one control parameter, which in the embodiment described is, as stated above, the maximum operating speed *vₒₚₘ* of the machining tool 3.

This comparison allows the processing unit 21 to determine whether the current rotation speed *vᵣ* is within the safety limits for the tool coupled to the electro-spindle 1.

Figure 4 illustrates a diagram of the interaction between the components of the machining assembly A.

In use, as mentioned, the processing unit 21 is configured to compare the rotation speed *vᵣ* of the drive shaft 12, determined by the sensor system 22, with the maximum operating speed *vₒₚₘ* of the machining tool 3 when coupled to the tool holder 12 of the electro-spindle 1. In particular, if ${v}_{r} > {v}_{opm}$ the processing unit 21 activates a safety procedure.

Additionally, a speed value that should not be exceeded is the nominal speed value of the tool *Vₙₘᵤ* the nominal tool speed is an intrinsic and characteristic speed value for the individual machining tool 3.

Preferably, the rotation speed *vᵣ* of the machining tool 3, when coupled to the electro-spindle 1 should not exceed the nominal speed of the tool *Vₙₘᵤ* to avoid causing damage to the working tool 3 itself and/or to the operator.

In particular, it can be predicted that if ${v}_{r} > {v}_{nmu}$ the processing unit 21 activates a safety procedure.

Further, verify that the rotation speed *vᵣ* is less than the maximum operating speed *vₒₚₘ* can occur as an alternative to, or in combination with, the verification that the rotation speed *vᵣ* is less than the nominal speed of the tool *Vₙₘᵤ.*

In one embodiment, the memory device 33 of the machining tool 3 may have stored only the identifier, so as to transmit it to the processing unit 21. The latter may then determine the maximum operating speed *vₒₚₘ,* detecting it from prestored curves or calculating it using algorithms.

In a further embodiment, the memory device 33 can store all the working parameters, i.e. the maximum nominal speed, the mass *Mᵤₜ* and the position of the center of gravity *B* of the machining tool 3 or other equivalent parameters capable of characterizing the mass distribution. The processing unit 21 determines the maximum permissible rotation speed *vₒₚₘ* after acquiring the tool parameters from detector 23 and acquires the instantaneous actual speed *vᵣ*.

In some embodiments, the sensor system 22 may comprise a signal meter for detecting the power frequency of the electric motor 13.

In some embodiments, by way of example, the electric motor 13 may be an asynchronous motor with a substantially fixed supply frequency (maximum fluctuations of +/- 5%).

The diagram also shows communication paths between the components and external systems, indicated by wireless signal symbols. A C-graph is displayed in the figure, showing operating curves for the operating parameters of the installed machining tool 3.

In some embodiments, the control system 2 may be connectable to a mobile device S, such as a smartphone and the like, and a control center in *cloud,* to which said control system 2 is connected when a dangerous circumstance is detected when the rotation speed *vᵣ* of the drive shaft 12 is greater than said maximum operating speed *vₒₚₘ* of the machining tool 3.

The overall arrangement demonstrates how the processing unit 21 receives data from the sensor system 22 and communicates with the memory device 33 of the machining tool 3 to monitor and control the operating parameters.

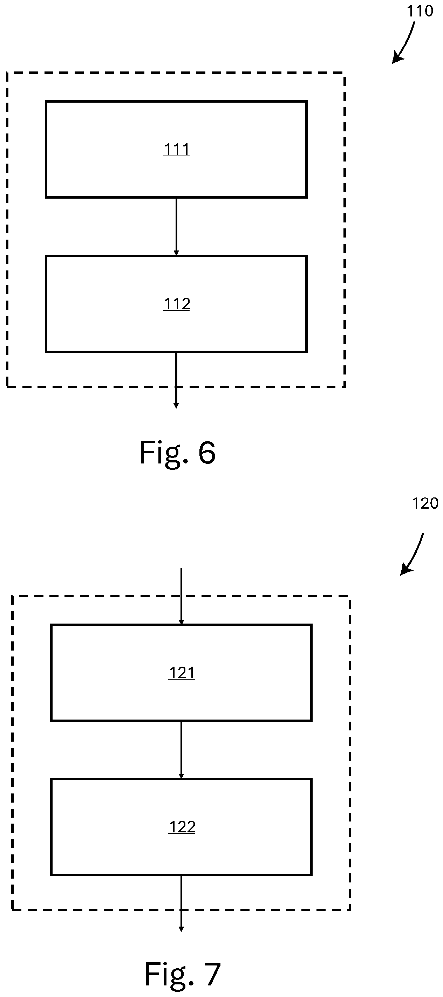

Figure 6 illustrates a flowchart of a method 100 for monitoring and controlling operating parameters of machining assembly A. The method 100 comprises a sequence of steps that process and evaluate operating data.

Method 100 starts with a step 110 of acquisition of the working parameters of the machining tool 3 coupled to the electro-spindle 1. In this step, the control system 2 obtains information on the characteristics and operational capabilities of the machining tool 3 currently in use.

Subsequently, a step 120 determines the rotational speed of the drive shaft 12 of the electro-spindle 1. This step may use the sensor means 22 to accurately measure the actual rotational speed *vᵣ* of shaft 12 during operation.

The method 100 then proceeds with a step 130 of comparing the rotation speed *vᵣ* effective drive shaft 12 and maximum operating speed *vₒₚₘ* of machining tool 3. This comparison ensures that machining tool 3 operates within its safety limits.

In some embodiments, for safety reasons, it is possible to set a rotation speed *vᵣ* for the tool which cannot be exceeded, therefore ignoring the detection of the instantaneous speed and comparison with the maximum speed.

Determining the maximum operating speed *vₒₚₘ* associated with the machining tool 3 occurs through the curves of the maximum operating speeds as a function of the mass and the position of the center of gravity of the tool, which can be stored in the memory of the processing unit 21 or by executing, within the processing unit 21, appropriate algorithms.

If the rotation speed *vᵣ* of the drive shaft 12 is greater than the maximum operating speed *vₒₚₘ* and/or the nominal speed *vₙₘᵤ* of the machining tool 3, the method 100 proceeds to a safety procedure execution step 140. This step may include actions such as issuing an alarm or disabling the rotation enable via logic signal 24, to prevent damage or dangerous situations.

The flowchart shows a feedback loop from step 140 to step 110, allowing continuous monitoring of operating parameters. The feedback loop allows control system 2 to dynamically adapt to changing machining conditions and consistently maintain safe operation of machining assembly A.

Figure 7 illustrates a block diagram showing the details of step 110 of the method 100 for controlling the operation of the machining assembly A. The sub-steps include the activation 111 of the detector 23, for connection to the memory device 33 of the machining tool 3, the acquisition 112 of the identifier and, therefore, of the type of machining tool 3 by means of said detector 23, and the transmission 113 of the data relating to the parameters of the specific tool 3 in use to the processing unit 21.

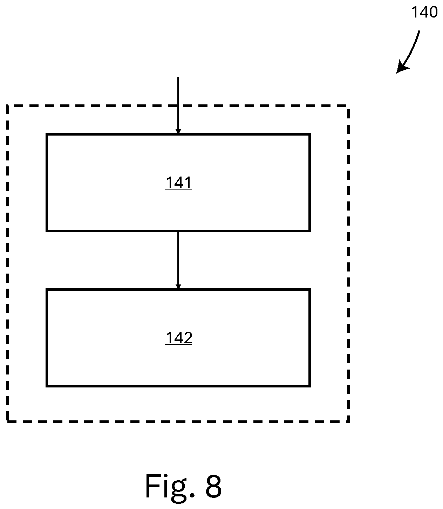

Figure 8 illustrates a flowchart showing the details of step 120 for determining the rotational speed *vᵣ* of the drive shaft 12 of the electro-spindle 1. Step 120 includes two alternative sub-steps for detecting the rotation speed.

A sub-step 121 provides for the detection of the rotation speed *vᵣ* of the drive shaft 12 by means of a solid-empty cam wheel coupled to an inductive sensor or an optical encoder. In this sub-step, a solid-empty cam wheel or an encoder wheel is applied to the drive shaft 12, generating pulses that are detected and converted into a measurement of the angular velocity of the shaft 12.

A sub-step 122 provides for the determination of the rotation speed *vᵣ* of the drive shaft 12 by detecting the power frequency (typically of the circulating currents) of the electric motor 13. Since the speed of the electric motor 13 is directly related to the frequency of the circulating currents, this measurement allows the rotation speed to be calculated *vᵣ* of the drive shaft 12.

Figure 9 illustrates a flowchart showing the details of a step 140 of executing a safety procedure in the machining assembly. Step 140 includes two possible safety actions represented by steps 141 and 142.

A step 141 provides for the emission of an alarm. In this step, the processing unit 21 is configured to generate an alarm signal when the rotation speed *vᵣ* of the drive shaft 12 exceeds the maximum operating speed *vₒₚₘ* and/or the nominal speed *vₙₘᵤ* of the machining tool 3 coupled to the electro-spindle 1. The alarm may be an audible, visual signal or a combination of both, designed to alert the operator of a potentially dangerous overspeed condition.

A sub-step 142 provides for the interruption of the power supply to the electric motor 13. In this sub-step, the processing unit 21 is configured to interrupt the power supply to the electric motor 13 of the electro-spindle 1 when *vᵣ > vₒₚₘ* and/or when *vᵣ* > *vₙₘᵤ*. Interrupting the power stops the rotation of the drive shaft 12, preventing potential damage to the machining tool 3 or the workpiece.

The processing unit 21 may be configured to perform either or both of steps 141 and 142 as part of the safety procedure, depending on the severity of the situation and the system settings.

In some embodiments, it is possible to provide for the emission of an alarm. In this step, the processing unit 21 is configured to generate an alarm signal when the rotation speed *vᵣ* of the drive shaft 12 exceeds the maximum operating speed *vₒₚₘ* and/or the nominal speed *vₙₘᵤ* of the machining tool 3 coupled to the electro-spindle 1. The alarm may be an audible, visual signal or a combination of both, designed to alert the operator of a potentially dangerous overspeed condition.

A further step may be foreseen, which comprises the interruption of the power supply to the electric motor 13. In this step, the processing unit 21 is configured to interrupt the rotation enable to the electric motor 13 of the electro-spindle 1 when *vᵣ* > *Vₙₘᵤ* and/or when *vᵣ* > *vₒₚₘ*. Interrupting the rotation enable stops the rotation of the drive shaft 12, preventing potential damage to the machining tool 3 or the workpiece.

The processing unit 21 may be configured to perform one or both of the steps described as part of the safety procedure, depending on the severity of the situation and the system settings.

In some configurations, the processing unit 21 may be configured to transmit an informational message to a mobile terminal S in the safety procedure. This message may provide details about the overspeed condition and the actions taken by the system 2.

In other configurations, the processing unit 21 may be configured to transmit a message in the security procedure to a remote control center operating in the cloud.

In some embodiments, the processing unit 21 may be configured to safety-deactivate the power supply to the entire machining center M.

The machining assembly A can be part of a machining center M for machining parts made of wood, plastic, metal and similar materials.

The machining center M may include a machining head that incorporates the machining assembly.

### Advantages

An advantage of the present invention is that it provides an automated system for controlling the maximum operating speed of the electro-spindle as a function of the mounted tool, eliminating the need for the operator to manually consult curves or diagrams.

Another advantage of the present invention is that it prevents the accidental exceeding of the maximum operating speed permitted for the specific electro-spindle-tool combination in use, thus reducing the risk of damage or malfunction of the system.

Another advantage of the present invention is that it implements a safety mechanism that automatically intervenes if the maximum operating speed is exceeded, protecting the system and increasing the safety of the processing operations.

An advantage of the present invention is that it reduces the risk of human errors in setting the machining parameters, thanks to the automatic acquisition of the characteristics of the mounted tool.

Another advantage of the present invention is that it increases the efficiency and productivity of machining operations, allowing the potential of each electro-spindle-tool combination to be exploited to the maximum without compromising safety.

Another advantage of the present invention is that it provides a flexible system that can be adapted to different types of tools and processes, thanks to the storage of operating parameters for each tool.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machining unit (U) for machining of workpieces, such as wooden, plastic, fiberglass, carbon, metal workpieces, and the like, comprising:
a machining assembly (A) having:
an electro-spindle (1), comprising
an electric motor (13) for generating a driving force,
a machining tool (3) for machining workpieces,
a drive shaft (12), operated by said electric motor (13), wherein said drive shaft (12) is configured to transmit the driving torque of said electric motor (13), and
a tool holder (14), mechanically coupled to said drive shaft (12);
a machining tool (3), for machining a workpiece, wherein said machining tool (3) is removably couplable to said tool holder (14) of said electro-spindle (1), so as to be driven by the driving torque of said electric motor (13), wherein the operation of said machining tool (3) is defined by one or more operating parameters (*vₒₚₘ, B, Mᵤₜ, Vₙₘᵤ*); and
a control system (2), for controlling the speed of the drive shaft (12) of said electro-spindle (1);
**characterized in that** said control system (2) comprises
a processing unit (21), having a memory in which data related to at least one operating parameter of each tool (3) couplable to the electro-spindle (1) are stored, and
sensor means (22), for determining the rotation speed (*vᵣ*) of said drive shaft (13),
wherein said processing unit (21) is configured to:
compare the rotation speed (*vᵣ*), or a function thereof, of said drive shaft (12) as determined by said sensor means (22) with said at least one control parameter (*vₒₚₘ, vₘₙᵤ*) of the machining tool (3) coupled to said tool holder (14) of said electro-spindle (1), wherein said maximum operating speed (*vₒₚₘ*) is a function of said operating parameters (*vₒₚₘ, B, Mᵤₜ, vₙₘᵤ*); and
activate a safety procedure if said rotation speed (*vᵣ*)*,* or a function thereof, of said drive shaft (12) is greater than a pre-definable threshold of said control parameter (*vₒₚₘ, vₘₙᵤ*) of said machining tool (3) coupled to said tool holder (14).

2. Machining unit (U) according to claim 1, **characterized**
**in that** said machining tool (3) comprises a memory device (33) in which a respective identifier is stored to indicate the type of the machining tool (3),
**in that** said control system (2) comprises
a detector (23), operatively connected to said processing unit (21),
wherein said detector (23) is connectable, preferably via a wireless connection, to said memory device (33) of said machining tool (3), such that said detector (23) acquires the identifier of said machining tool (3) coupled to said electro-spindle (1), and
**in that** said processing unit (21) is configured to determine or detect said one or more operating parameters (*v_{opm,} B, Mᵤₜ, vₙₘᵤ*) following the acquisition of the identifier of said machining tool (3) coupled to said electro-spindle (1) as detected by said detector (23).

3. Machining unit (U) according to any one of the preceding claims, **characterized**
**in that** said memory device (33) of said machining tool (3) stores said one or more operating parameters (*vₒₚₘ, B, Mᵤₜ, vₙₘᵤ*), and
**in that** said one or more operating parameters (*v_{opm,} B, Mᵤₜ, vₙₘᵤ*) are transmitted to said detector (23) to be processed by said processing unit (21) for determining said maximum operating speed (*vₒₚₘ*).

4. Machining unit (U) according to any one of the preceding claims, **characterized in that** said control parameter comprises the maximum operating speed (*vₒₚₘ*) of said machining tool (3).

5. Machining unit (U) according to any one of the preceding claims, **characterized in that** said control parameter comprises the nominal speed (*vₙₘᵤ*) of said machining tool (3).

6. Machining unit (U) according to any one of the preceding claims, **characterized**
**in that** said electric motor (13) is powered by a pulse width modulation (PWM) power supply, and
**in that** said sensor means (22) comprise a signal meter, for detecting the frequency with which said electric motor (13) is powered, to determine the rotation speed (*vᵣ*) of said drive shaft (12).

7. Machining unit (U) according to any one of the preceding claims, **characterized in that** when the rotation speed (*vᵣ*) of said drive shaft (12) as determined by said sensor means (22) is greater than the maximum operating speed (*vₒₚₘ*) or said nominal speed (*vₙₘᵤ*) of said machining tool (3) coupled to said electro-spindle (1), said processing unit (21) is configured to:
emit an alarm; and/or
interrupt the rotation command of said electric motor (13);
transmit an information message to a user's mobile terminal (S); and/or
transmit a message to a cloud-operated remote control center; and/or
interrupt the power supply to the machining center (M).

8. Machining unit (U) according to any one of the preceding claims, **characterized in that** said operating parameters (*vₒₚₘ, B, Mᵤₜ, vₙₘᵤ*) for characterizing each machining tool (3) and/or for determining said maximum operating speed (*vₒₚₘ*) couplable to said electro-spindle (1), comprise one or more of the following:
mass (*Mᵤₜ*) of the machining tool (3);
position (*B*) of the center of mass of the machining tool (3), and/or other geometric parameters useful for estimating the distribution of the mass of the tool along its own axis;
maximum nominal speed (*vₙₘᵤ*) of the tool.

9. Machining unit (U) according to any one of the preceding claims, **characterized in that** said processing unit (21) is arranged within the chassis (11) of said electro-spindle (1).

10. Machining unit (U) according to any one of claims 1-8, **characterized in that** said processing unit (21) is arranged remotely with respect to said electro-spindle (1).

11. Machining center (M) for machining wooden, plastic, metal workpieces, and the like, comprising a machining head having a machining unit (U), according to any one of the preceding claims.

12. Method (100) for controlling the operation of a machining unit (U) according to any one of claims 1-10, comprising the following steps:
acquiring (110) said operating parameters (*vₒₚₘ, B, Mᵤₜ, vₙₘᵤ*) associated with the machining tool (3) coupled to said electro-spindle (1) to determine said control parameter (*v_{opm,} vₘₙᵤ*), such as the maximum operating speed (*vₒₚₘ*) of said machining tool (3) and/or the nominal speed (*vₙₘᵤ*) of said machining tool (3), when associated with said electro-spindle (1);
determining (120) the rotation speed (*vᵣ*) of the drive shaft (12) of said electro-spindle (1); and
comparing (130) the rotation speed (*vᵣ*) of the drive shaft (12) of said electro-spindle (1), or a function thereof, with a pre-definable threshold of said control parameter (*vₒₚₘ, vₘₙᵤ*) of said machining tool (3) when associated with said electro-spindle (1);
wherein if the rotation speed (*vᵣ*) of the drive shaft (12), or a function thereof, is greater than said threshold of said control parameter (*vₒₚₘ, vₘₙᵤ*), performing (140) a safety procedure.

13. Method (100) according to the preceding claim, **characterized in that** said acquisition step (110) comprises the sub-steps of:
activating (111) the detector (23) of said electro-spindle (1), to operatively connect with the memory device (33) of said machining tool (3); and
acquiring (112) the operating parameters of the machining tool (3) when associated with the electro-spindle (1) through said detector (23); and
transmitting (113) the operating parameters of the machining tool (3) to said processing unit (21).

14. Method (100) according to any one of claims 12 or 13, **characterized in that** said step (120) of determining the rotation speed (*vᵣ*) of the drive shaft (12) of said electro-spindle (1) comprises the sub-steps of:
detecting (121) the rotation speed (*vᵣ*) of the drive shaft (12); and/or
determining (122) the rotation speed (*vᵣ*) of the drive shaft (12) by detecting the duty cycle of the electric motor (13) power supply.

15. Method (100) according to any one of claims 12-14, **characterized in that** said comparison step (130) comprises the sub-step of determining the maximum operating speed (*vₒₚₘ*) associated with said machining tool by means of said operating parameters (*vₒₚₘ, B, Mᵤₜ, vₙₘᵤ*), wherein said operating parameters (*vₒₚₘ*) *B, Mᵤₜ, vₙₘᵤ*) comprise functions or curves of the operating speeds of the electro-spindle (1) as a function of the mass and the position of the center of mass of the machining tool (3) itself.

16. Method (100) according to any one of claims 12-15, **characterized in that** said step (140) of performing said safety procedure comprises the following sub-steps:
- emitting an alarm (141); and/or
- interrupting the power supply to the machining center (M);
- interrupting (142) the rotation command of said electric motor (13);
- transmitting an information message to a user's mobile terminal (S); and/or
- transmitting a message to a cloud-operated remote control center; and/or
- interrupting the supply current to the machining center (M).
